# EUROPEAN PATENT APPLICATION

(11) **EP 1 650 726 A1**
(43) Date of publication of application: **26.04.2006**
(21) Application number: 04771252.6
(22) Date of filing: 29.07.2004
(51) Int. Cl.: G09B 29/00

(54) **COMMUNICATION TYPE MAP DISPLAY DEVICE**

(30) Priority: 01.08.2003 JP 2003285248
(71) Applicant: MATSUSHITA ELECTRIC INDUSTRIAL CO., LTD., Kadoma-shi, Osaka 571-8501 (JP)
(72) Inventor: OHDACHI, Eriko, Kanagawa 224-0054 (JP)
(74) Representative: Pautex Schneider, Nicole Véronique
(86) International application number: PCT/JP2004/011225
(87) International publication number: WO 2005/013241

(57) **Abstract**

A communication type map display apparatus according to the present invention comprises: an inputting unit (11) for inputting an instruction in response to an input operation; a map data obtaining unit (12) for communicating with external devices (3a to 3n) exterior thereto to obtain map data; a control unit (15) for controlling the map data obtaining unit (12) in response to an input signal, obtaining the map data from the external devices, and subjecting the map data to image processing so as to generate image data on a map screen or an area screen, a storage unit (13) for storing the map data obtained by the map data obtaining unit (12), management data of the map data, and the like; and a display unit (14) for displaying an image based on the image data generated by the control unit (15). The communication type map display apparatus thus constructed can display an area of the map data stored therein or the map data to be obtained before obtaining the map data by means of communication.

## Description

### TECHNICAL FIELD OF THE INVENTION

The present invention relates to a communication type map display apparatus for obtaining map data via communication means, and displaying a map based on the obtained map data, and more particularly to a communication type map display apparatus having a small amount of storage capacity.

### DESCRIPTION OF THE RELATED ART

Conventionally, a so-called communication type map display apparatus such as, for example, a mobile cellular phone, sometimes fails to obtain image data indicative of, for example, a desired map, in addition to currently provided image data, due to the limited storage capacity of its memory, although the image data to be obtained is important for an operator. There has been known a communication type map display apparatus disclosed in, for example, Japanese Patent Laid-Open Publication 2002-90162 (page 7, column 0065), and Japanese Laid-Open Publication 2002-107169 (page 16, column 0094), which is designed to delete pieces of map data stored in the memory medium one after another in order of length of time elapsed since most recently referred to, whenever the storage capacity becomes insufficient.

The conventional communication type map display apparatus, however, encounters a drawback in that the conventional communication type map display apparatus tends to mistakenly delete map data, which is important but obtained and stored long time ago, so as to obtain and store another map data due to the insufficient storage capacity. The conventional communication type map display apparatus is thus required to obtain the same map data again and increased in communication costs, resulting from the fact that the conventional communication type map display apparatus cannot permit an operator to confirm whether or not the map data can be deleted in advance.

### DISCLOSURE OF THE INVENTION

The present invention is made with a view to overcoming the previously mentioned drawback, and it is, therefore, an object of the present invention to provide a communication type map display apparatus, which permits an operator to confirm the map data already stored in the storage medium, and thus prevents unnecessary communication, thereby eliminating the unnecessary communication costs.

In accordance with a first aspect of the present invention, there is provided a communication type map display apparatus, comprising: an inputting unit for inputting an instruction; a map data obtaining unit for communicating with a device exterior thereto to obtain map data; a storage unit for storing the map data obtained by the map data obtaining unit; an area screen data generating unit for generating area screen data to be used to confirm an area to be indicated based on the map data stored in the storage unit; a map screen data generating unit for generating map screen data indicative of a map based on the map data stored in the storage unit; and a display unit for displaying at least one of screens including an area screen based on the area screen data and a map screen based on the map screen data, and in which the area screen data generating unit is operative to generate the area screen data in such a manner that an area of a map corresponding to the map data to be obtained by the map data obtaining unit and an area corresponding to the map data stored in the storage unit are recognized as being distinct from each other in the area screen under the condition that the instruction inputted by the inputting unit requests to obtain the map data.

In accordance with this construction, the communication type map display apparatus according to the present invention can permit an operator to confirm an area to be indicated based on the map data to be obtained while obtaining map data, and thus prevent redundant communication and eliminate the unnecessary communication costs, resulting from the fact that the present embodiment of the communication type map display apparatus is operative to display the area screen indicative of areas corresponding to the map data already stored in the storage unit and areas corresponding to the map data to be obtained before obtaining the map data from the exterior device.

In accordance with a second aspect of the present invention, there is provided a communication type map display apparatus, comprising; an inputting unit for inputting an instruction; a map data obtaining unit for communicating with a device exterior thereto to obtain map data; a storage unit for storing the map data obtained by the map data obtaining unit; an available storage capacity judging unit for judging whether or not there is an available storage capacity in the storage unit for storing the map data to be obtained by the map data obtaining unit; a deletion data deciding unit for deciding map data to be deleted from the storage unit in the case that the available storage capacity judging unit judges that there is no available storage capacity for storing the map data to be obtained by the map data obtaining unit; an area screen data generating unit for generating area screen data to be used to confirm an area to be indicated based on the map data stored in the storage unit; a map screen data generating unit for generating map screen data indicative of a map based on the map data stored in the storage unit; and a display unit for displaying at least one of screens including an area screen based on the area screen data and a map screen based on the map screen data, and in which the area screen data generating unit is operative to generate the area screen data in such a manner that an area corresponding to the map data decided to be deleted by the deletion data deciding unit from the storage unit and an area corresponding to the map data stored in the storage unit are recognized as being distinct from each other in the area screen under the condition that the instruction inputted by the inputting unit requests to obtain the map data.

In accordance with this construction, the communication type map display apparatus according to the present invention can permit an operator to confirm an area to be deleted from the storage unit while obtaining map data, and thus prevent redundant communication and eliminate the unnecessary communication costs, resulting from the fact that the present embodiment of the communication type map display apparatus is operative to display the area screen indicative of areas corresponding to the map data already stored in the storage unit and areas corresponding to the map data to be deleted from the storage unit in the case that the map data is deleted before obtaining map data from the exterior device.

In the aforementioned communication type map display apparatus according to the present invention, the area screen data generating unit may be operative to generate the area screen data in such a manner that an area of a map corresponding to the map data to be obtained by the map data obtaining unit is recognized as being further distinct in the area screen under the condition that the instruction inputted by the inputting unit requests to obtain the map data.

In accordance with this construction, the communication type map display apparatus according to the present invention can permit an operator to confirm an area corresponding to the map data to be obtained and an area to be deleted from the storage unit in the case that that the map data is deleted while obtaining map data, and thus prevent redundant communication and eliminate the unnecessary communication costs.

In the aforementioned communication type map display apparatus according to the present invention, the area screen data generating unit may be operative to generate the area screen data in such a manner that an area corresponding to the map screen previously displayed by the display unit is recognized as being further distinct in the area screen.

In accordance with this construction, the communication type map display apparatus according to the present invention can permit an operator to recognize an area corresponding to the map screen previously displayed by the display unit as being further distinct in the area screen indicative of areas corresponding to the map data already stored in the storage unit, thereby being improved in operability.

In the aforementioned communication type map display apparatus according to the present invention, the inputting unit may include position detecting means for detecting a current position, and the map data obtaining unit may be operative to obtain map data indicative of an area including the current position under the condition that the map data indicative of the area including the current position is not stored in the storage unit.

In accordance with this construction, the communication type map display apparatus according to the present invention can display a map screen including the current position even though the current position may be moved to an area corresponding to map data not stored in the storage unit, thereby being improved in operability.

In the aforementioned communication type map display apparatus according to the present invention, the map data obtaining unit may be operative to obtain map data indicative of an area corresponding to a map screen to be scrolled and displayed by the display unit under the condition that the instruction inputted by the inputting unit requests to scroll the map screen displayed by the display unit, and the map data indicative of the map screen to be scrolled and displayed by the display unit is not stored in the storage unit.

In accordance with this construction, the communication type map display apparatus according to the present invention can display a map screen of a scrolled display area even though the display area is moved to an area corresponding to map data not stored in the storage unit in response to a scrolling instruction, thereby being improved in operability.

In the aforementioned communication type map display apparatus according to the present invention, the map screen data generating unit may include a blank map data generating section for generating blank map data indicative of a blank map, and the map screen data generating unit may be operative to generate map screen data indicative of an area corresponding to a map screen to be scrolled and displayed by the display unit based on the blank map data generated by the blank map data generating section under the condition that the instruction inputted by the inputting unit requests to scroll the map screen displayed by the display unit, and the map data indicative of the map screen to be scrolled and displayed by the display unit is not stored in the storage unit.

In accordance with this construction, the communication type map display apparatus according to the present invention can display a blank map in the case that the map data indicative of the map screen to be scrolled and displayed by the display unit is not stored in the storage unit, and thus prevents from obtaining unnecessary map data, thereby preventing unnecessary communication and eliminating the unnecessary communication costs.

The aforementioned communication type map display apparatus according to the present invention may further comprise a blank map area detecting unit for detecting a blank map area indicated based on the map screen data generated by the map screen data generating unit on the basis of the blank map data in the map screen displayed by the display unit, and in which the map data obtaining unit may be operative to obtain map data corresponding to the blank map area under the condition that the blank map area is larger in area than a predetermined value.

In accordance with this construction, the communication type map display apparatus according to the present invention can operate not to scroll the map screen any more toward the direction where the blank map is displayed in the case that the map data is not desired to be obtained, and thus prevents from obtaining unnecessary map data, thereby preventing unnecessary communication and eliminating the unnecessary communication costs.

In the aforementioned communication type map display apparatus according to the present invention, the area screen data generating unit may be operative to generate area screen data based on a scale size, and the map screen data generating unit may be operative to generate map screen data based on the scale size under the condition that the instruction inputted by the inputting unit requests to change the scale sizes of the area screen and the map screen displayed by the display unit.

In accordance with this construction, the communication type map display apparatus according to the present invention can display areas distinctively although the number of areas corresponding to map data stored in the storage unit are too many, thereby being improved in operability.

In accordance with a third aspect of the present invention, there is provided a communication type map display apparatus, comprising: an inputting unit for inputting an instruction; a map data obtaining unit for communicating with a device exterior thereto to obtain map data; a storage unit for storing the map data obtained by the map data obtaining unit; a deletion order deciding unit for deciding an order of map data to be deleted from the storage unit in the case that there is no available storage capacity for storing the map data to be obtained by the map data obtaining unit; an area screen data generating unit for generating area screen data to be used to confirm an area to be indicated based on the map data stored in the storage unit; a map screen data generating unit for generating map screen data indicative of a map based on the map data stored in the storage unit; and a display unit for displaying at least one of screens including an area screen based on the area screen data and a map screen based on the map screen data, and in which the area screen data generating unit is operative to generate the area screen data in such a manner that the order of map data to be deleted decided by the deletion order deciding unit is recognized as being distinct in the area screen under the condition that the instruction inputted by the inputting unit requests to switch the screen displayed by the map screen from the map screen to the area screen.

In accordance with this construction, the communication type map display apparatus according to the present invention can permit an operator to confirm the order of map data to be deleted from the storage unit at any given time, thereby being improved in operability.

In the aforementioned communication type map display apparatus according to the present invention, the area screen data generating unit may be operative to generate the area screen data in such a manner that the order of map data to be deleted decided by the deletion order deciding unit is indicated by the display unit as a number.

In accordance with this construction, the communication type map display apparatus according to the present invention can permit an operator to confirm the order of map data to be deleted from the storage unit with a number, thereby being improved in operability.

In the aforementioned communication type map display apparatus according to the present invention, the area screen data generating unit may be operative to generate the area screen data in such a manner that the order of map data to be deleted decided by the deletion order deciding unit is indicated by the display unit at predetermined time intervals.

In accordance with this construction, the communication type map display apparatus according to the present invention can permit an operator to confirm the order of map data to be deleted from the storage unit at predetermined time intervals, thereby being improved in operability.

In the aforementioned communication type map display apparatus according to the present invention, the area screen data generating unit may be operative to generate the area screen data in such a manner that an area to be indicated based on the map data decided by the deletion order deciding unit to be deleted in order of the number equal to the number of instructions inputted by the inputting unit is recognized as being distinct in the area screen under the condition that the instruction inputted by the inputting unit requests to confirm the order of map data to be deleted decided by the deletion order deciding unit.

In accordance with this construction, the communication type map display apparatus according to the present invention can permit an operator to confirm the order of map data to be deleted from the storage unit one after another, thereby being improved in operability.

In the communication type map display apparatus according to the present invention, the deletion order deciding unit may be operative to decide an order of map data to be deleted from the storage unit in accordance with an order indicated by the instruction inputted by the inputting unit under the condition that the instruction inputted by the inputting unit requests to indicate map data to be deleted from the storage unit.

In accordance with this construction, the communication type map display apparatus according to the present invention can permit an operator to arbitrarily change the order of map data to be deleted from the storage unit at any given time, thereby being improved in operability.

In the communication type map display apparatus according to the present invention, the deletion order deciding unit may be operative to decide map data to be deleted from the storage unit, in such a manner that map data indicated by the instruction inputted by the inputting unit is excluded under the condition that the instruction inputted by the inputting unit requests to indicate map data not to be deleted from the storage unit.

In accordance with this construction, the communication type map display apparatus according to the present invention can permit an operator to specify map data not to be deleted, thereby being improved in operability.

In the communication type map display apparatus according to the present invention, the display unit may be operative to display a window on the map screen in such a manner that the area screen is indicated within the window in the case that the area screen and the map screen are displayed by the display unit.

In accordance with this construction, the communication type map display apparatus according to the present invention can display both the map screen and the area screen, resulting from the fact that the area screen is displayed within a window displayed on the map screen while the map screen is displayed.

### BRIEF DESCRIPTION OF THE DRAWINGS

The features and advantages of a communication type map display apparatus according to the present invention will be more clearly understood from the following description taken in conjunction with the accompanying drawings in which:
FIG. 1 is a block diagram showing a first preferred embodiment of the communication type map display apparatus according to the present invention and a transmitting and receiving system including the communication type map display apparatus;
FIG. 2 is a block diagram showing an example of data elements stored in a storage unit forming part of the first embodiment of the communication type map display apparatus according to the present invention;
FIG. 3 is a block diagram showing an example of management data elements stored in the storage unit forming part of the first embodiment of the communication type map display apparatus according to the present invention;
FIG. 4 is a flow chart explaining an operation of the first embodiment of the communication type map display apparatus according to the present invention;
FIG. 5 is a diagram explaining a display image of a map screen displayed by the first embodiment of the communication type map display apparatus according to the present invention;
FIG. 6 is a diagram explaining a display image of an area screen displayed by the first embodiment of the communication type map display apparatus according to the present invention;
FIG. 7 is a flow chart explaining an area screen generating process carried out by a control unit forming part of the first embodiment of the communication type map display apparatus according to the present invention;
FIG. 8 is a diagram explaining a display image of a retained area in the area screen displayed by the first embodiment of the communication type map display apparatus according to the present invention;
FIG. 9 is a diagram explaining a display image of a display area of the map screen displayed until just before, in the area screen displayed by the first embodiment of the communication type map display apparatus according to the present invention;
FIG. 10 is a diagram explaining a display image of a target area in the area screen displayed by the first embodiment of the communication type map display apparatus according to the present invention;
FIG. 11 is a diagram explaining a display image of a deletion area in the area screen displayed by the first embodiment of the communication type map display apparatus according to the present invention;
FIG. 12 is a diagram explaining an example of a display image of the area screen in the course of being made by the first embodiment of the communication type map display apparatus according to the present invention;
FIG. 13 is a diagram explaining another example a display image of the area screen in the course of being made by the first embodiment of the communication type map display apparatus according to the present invention;
FIG. 14 is a diagram explaining a further example a display image of the area screen in the course of being made by the first embodiment of the communication type map display apparatus according to the present invention;
FIG. 15 is a diagram explaining an example a display image of the area screen completely made and displayed by the first embodiment of the communication type map display apparatus according to the present invention;
FIG. 16 is a functional block diagram showing a retained area judging means forming part of the first embodiment of the communication type map display apparatus according to the present invention;
FIG. 17 is a functional block diagram showing an inputting unit forming part of the first embodiment of the communication type map display apparatus according to the present invention;
FIG. 18 is a block diagram showing another example of management data elements stored in the storage unit forming part of the first embodiment of the communication type map display apparatus according to the present invention;
FIG. 19 is a diagram explaining a display image of an area screen displayed by the first embodiment of the communication type map display apparatus according to the present invention;
FIG. 20 is a diagram explaining a display image of an area screen displayed by the first embodiment of the communication type map display apparatus according to the present invention;
FIG. 21 is a diagram explaining a display image of an area screen displayed by the first embodiment of the communication type map display apparatus according to the present invention;
FIG. 22 is a functional block diagram showing an inputting unit forming part of a second embodiment of the communication type map display apparatus according to the present invention;
FIG. 23 is a flow chart explaining an operation of the second embodiment of the communication type map display apparatus according to the present invention;
FIG. 24 is a diagram explaining a display image of an area screen displayed by the second embodiment of the communication type map display apparatus according to the present invention;
FIG. 25 is a diagram explaining a display image of the area screen displayed by the second embodiment of the communication type map display apparatus according to the present invention;
FIG. 26 is a diagram explaining a display image of the area screen displayed by the second embodiment of the communication type map display apparatus according to the present invention;
FIG. 27 is a flow chart explaining a process to be carried out in a step S2308 shown in FIG. 23; and
FIG. 28 is a flow chart explaining a process to be carried out in a step S2310 shown in FIG. 23.

### DESCRIPTION OF THE PREFERRED EMBODIMENTS

Preferred embodiments of the present invention will be described hereinafter with reference to the drawings.

### (First Preferred Embodiment)

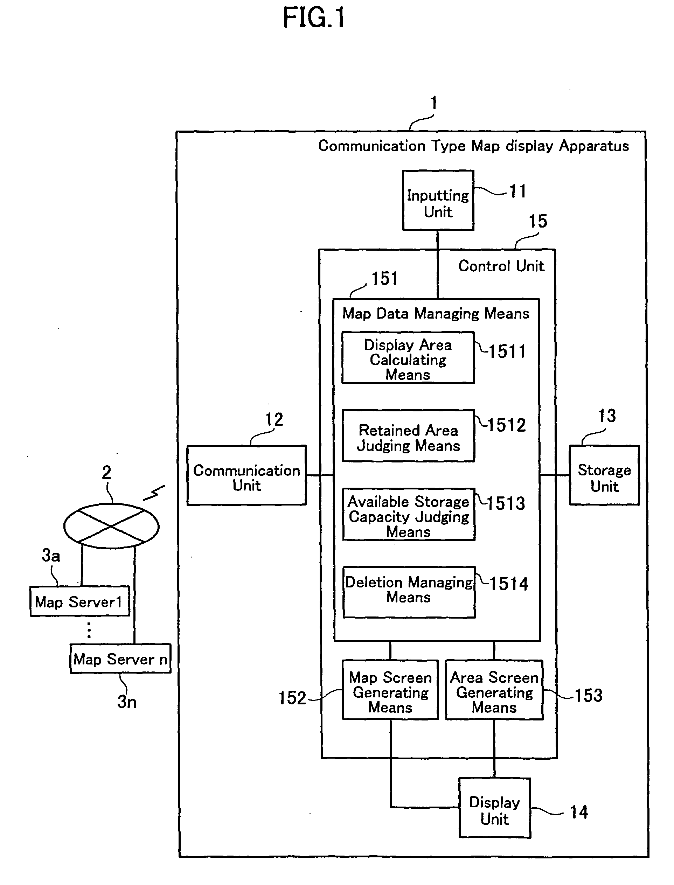

FIG. 1 is a block diagram showing a first preferred embodiment of the communication type map display apparatus according to the present invention and a transmitting and receiving system including the communication type map display apparatus. The present embodiment of the communication type map display apparatus is shown in FIG. 1 to bear a reference numeral 1 and connected with a plurality of map servers 3a to 3n through a communication network 2 such as, for example, an IP network, a mobile communication network, a wireless LAN (Local Area Network) and the like. Each of the map servers 3a to 3n has stored therein map data.

As clearly shown in FIG. 1, the present embodiment of the communication type map display apparatus comprises an inputting unit 11 for permitting an operator to input a signal indicative of an instruction, hereinlater simply referred to as "input instruction signal", a communication unit 12 for communicating with the map servers 3a to 3n through the communication network 2, a storage unit 13 for storing data including map data obtained by the communication unit 12 from the map servers 3a to 3n, a display unit 14 for displaying a map screen, an area screen, an operation guide message, and the other contents, and a control unit 15 for controlling the operations of the inputting unit 11, the communication unit 12, the storage unit 13, and the display unit 14. Here, the area screen is intended to mean a screen indicative of an area which can be indicated based on the map data stored in the storage unit 13.

The communication unit 12 constitutes a map data obtaining unit operative to communicate with a device exterior thereto to obtain map data.

The control unit 15 includes a map data managing means 151 for calculating a display area of the map (an area of the map to be indicated on a screen displayed by the display unit 14) in response to the input instruction signal inputted through the inputting unit 11, and determining map data corresponding to the display area as well as controlling the storage unit 13, which has stored therein the map data, to generate a map obtaining instruction signal indicative of an instruction to obtain map data, to be outputted to the communication unit 12, map screen generating means 152 for receiving the map data including the display area and a center position of the display area from the map data managing means 151 and generating map screen data to be outputted to the display unit 14, and area screen generating means 153 for receiving at least information data for a plurality of areas each in the form of a frame shape from the map data managing means 151 and generating area screen data indicative of the plurality of areas each in the form of a frame shape to be outputted to the display unit 14. Further, the control unit 15 is operative to generate the above mentioned map obtaining instruction signal. Here, the map screen data and the area screen data are intended to mean data indicative of images to be displayed by the display unit 14. Further, it is assumed that the map data stored in the storage unit 13 is divided into a plurality of pieces, hereinlater sometimes referred to as "data elements", respectively corresponding to a plurality of areas.

The map screen generating means 152 is constituted by a map screen data generating unit for generating map screen data indicative of a map based on the map data stored in the storage unit 13. The area screen generating means 153 is constituted by an area screen data generating unit for generating area screen data to be used to confirm an area to be indicated based on the map data stored in the storage unit 13.

The map data managing means 151 includes display area calculating means 1511 for determining a center position of a map to be displayed and calculate a display area of the map in response to the input instruction signal inputted through the inputting unit 11, retained area judging means 1512 for judging whether or not map data corresponding to the display area calculated by the display area calculating means 1511 is stored and retained in the storage unit 13, available storage capacity judging means 1513 for judging whether or not there is an available storage capacity in the storage unit 13 for storing map data or the like, and deletion managing means 1514 for deciding whether or not the map data stored in the storage unit 13 is to be deleted, and managing a deletion order of map data to be deleted from the storage unit 13 in the case that it is decided that the map data is to be deleted.

The available storage capacity judging means 1513 is constituted by an available storage capacity judging unit for judging whether or not there is an available storage capacity in the storage unit 13 for storing map data to be obtained by the map data obtaining unit.

The deletion managing means 1514 is constituted by a deletion data deciding unit for deciding map data to be deleted from the storage unit 13 in the case that the available storage capacity judging unit judges that there is no available storage capacity for storing the map data to be obtained by the map data obtaining unit 12, and a deletion order deciding unit for deciding an order of map data to be deleted from the storage unit 13 in the case that there is no available storage capacity for storing the map data to be obtained by the map data obtaining unit 12.

Constitutional elements forming part of the present embodiment of the communication type map display apparatus according to the present invention will be described in detail hereinlater.

The inputting unit 11 is designed to permit an operator to input desired information by way of, for example, touching a command panel displayed by the display unit 14 with a touch pen, not shown, or pressing a switch button disposed separately from the display unit 14 and, in response to the information thus inputted, generate an input instruction signal to be outputted to the control unit 15. The inputting unit 11 may be constituted by, for example, a left button permitting an operator to scroll a screen or move a cursor leftward, a right button permitting the operator to scroll the screen or move the curser rightward, an upper button permitting the operator to scroll the screen or move the cursor upwardly, and a lower button permitting the operator to scroll the screen or move the cursor downwardly.

The communication unit 12 includes circuits and software modules for carrying out communication in accordance with control procedures, and adding or deleting information data required for the communication through the communication network 2. Further, the communication unit 12 is operative to carry out predetermined processes required for the communication, and transmit to the map servers 3a to 3n a request signal indicative of an instruction to transmit the map data in response to the map obtaining instruction signal outputted from the map data managing means 151 forming part of the control unit 15, as well as receive data transmitted from the map servers 3a to 3n and transfer the data to the map data managing means 151 forming part of the control unit 15. Communicating with the map servers 3a to 3n to obtain predetermined data will be hereinlater simply referred to as "obtaining by means of communication".

The storage unit 13 includes a semiconductor memory, an optical disc, a magnetic disc, or the like, capable of being read, written, and randomly accessed. The storage unit 13 further includes circuits and software modules required for reading and writing operations.

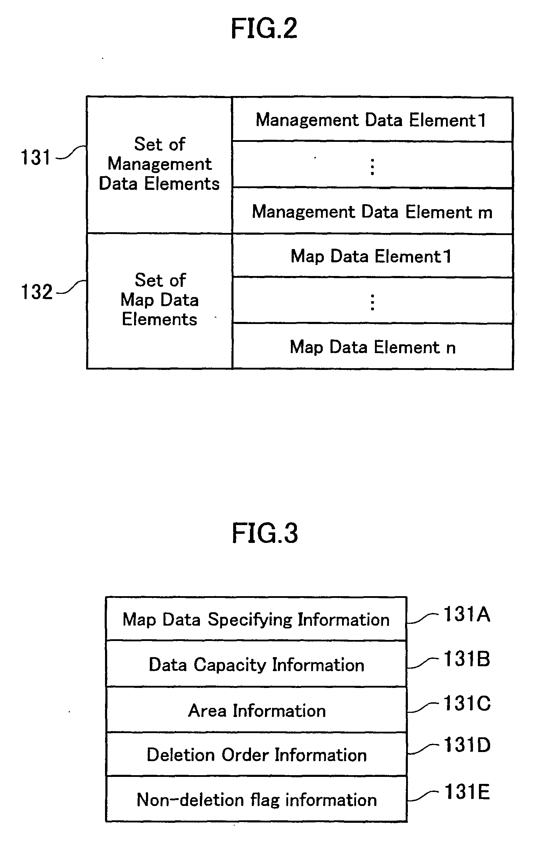

Data to be stored in the storage unit 13 is shown in FIG. 2 as including a set of management data elements 131 respectively used to manage a plurality of map data elements, and a set of map data elements 132 respectively having a plurality of map data elements. The management data elements 131 include a first management data element, a second management data element, ..., and an m-th management data element. The map data elements 132 include a first map data element, a second map data element, ..., and an n-th map data element. Each of the map data elements corresponds to one of management data elements. Here, it is assumed that m and n are integers and m is equal to or larger than n. This means that there may be provided one or more management data elements each not corresponding to any one of the map data elements.

It is further assumed that the management data elements stored in the storage unit 13 are similar in construction as one another. As best shown in FIG. 3, each of the management data elements includes map data specifying information 131A, data capacity information 131B, area information 131C, deletion order information 131D, and non-deletion flag information 131 E. The map data specifying information 131 A is information representative of, for example, a memory address or the like, indicating a storage area of the corresponding map data element. This means that each of the map data elements in respective areas is stored as a part of one of the map data element 132. The data capacity information 131B is information representative of a data capacity of the corresponding map data element, the area information 131C is information representative of an area to be indicated based on the corresponding map data element, the deletion order information 131D is information representative of a deletion order of the corresponding map data element, and non-deletion flag information 131E is information representative of a flag to be set when the corresponding map data is not deleted. Each of the map data elements in respective areas is composed of map data segments such as, for example, characters or graphics expressed in raster expression or vector expression.

The display unit 14 is constituted by, for example, a liquid crystal display.

The control unit 15 is constituted by, for example, a CPU (Central Processing Unit), a ROM (Read Only Memory), a flash ROM, an SRAM (Static Random Access Memory), a VRAM (Video-RAM), and other specific circuits and software modules.

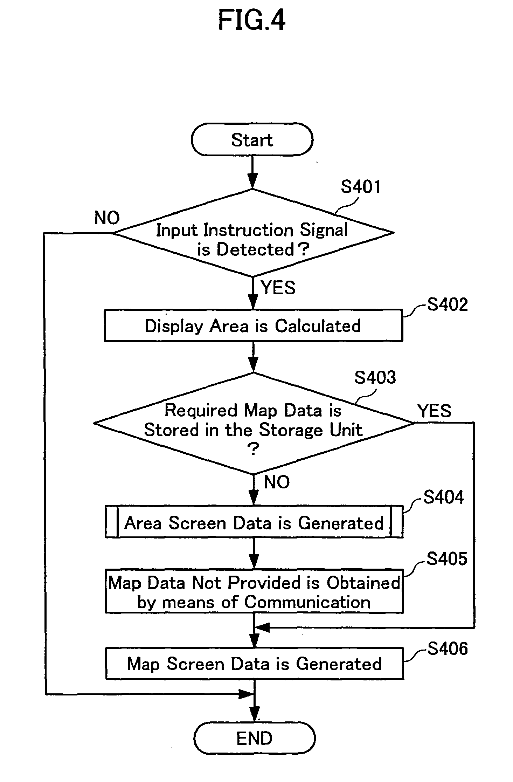

FIG. 4 is a flow chart explaining an operation of the present embodiment of the communication type map display apparatus according to the present invention. It is to be noted that FIG. 4 is a flow chart simply explaining an example of an operation of the present embodiment of the communication type map display apparatus according to the present invention, but this does not limit the operation of the communication type map display apparatus according to the present invention. It is further to be noted that technology of finding map data elements necessary for an operator and obtaining them through the communication network 2 to be stored in the storage unit 13, and technologies of having a map screen displayed by the display unit 14 on the basis of the map data stored in the storage unit 13 regardless of whether they have been obtained through the communication network 2 or in advance provided in the storage unit 13 are well known, and will thus not be described hereinafter.

Yet further, a method of deleting data elements in increasing order of frequency in usage is well known, and will thus not be described hereinafter. Further the more, an operation performed by the deletion managing means 1514 to update the deletion order information 131D stored in the storage unit 13 whenever the map data is referred to or obtained will not be described hereinafter.

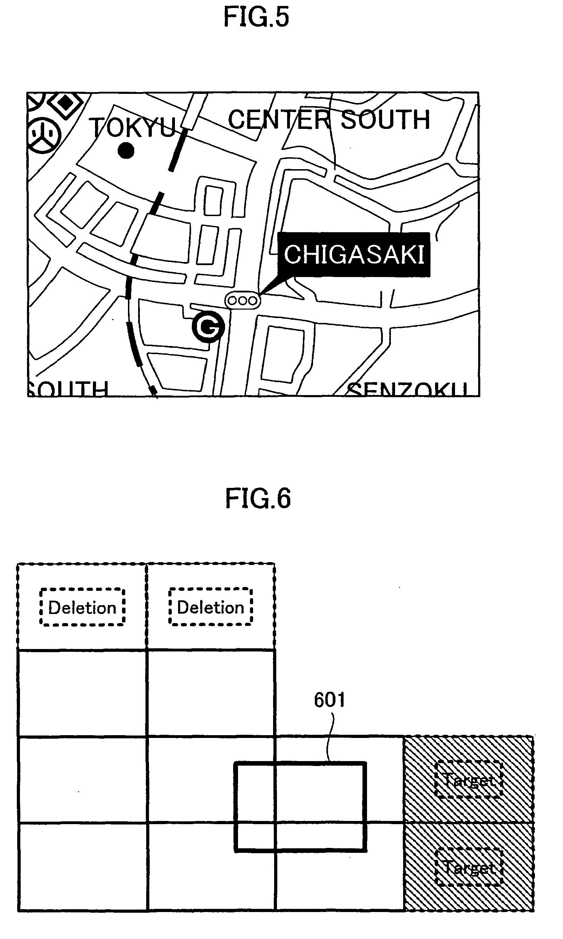

The operation performed by the present embodiment of the communication type map display apparatus will be described hereinlater under the condition that a display image of a map screen as shown in FIG. 5 is displayed by the display unit 14 as an initial display state.

Firstly, the inputting unit 11 is operated by an operator to input to an input instruction to scroll the screen with, for example, the left button permitting the operator to scroll the screen or move a cursor leftward, the right button permitting the operator to scroll the screen or move the curser rightward, the upper button permitting the operator to scroll the screen or move the cursor upwardly, and the lower button permitting the operator to scroll the screen or move the cursor downwardly. The inputting unit 11 is then operated to detect the above operations and instructions and, in response to the above operation and instruction thus detected, generate an input instruction signal to be outputted to the display area calculating means 1511 forming part of the control unit 15 (step S401).

Although it is described in the flow chart shown in FIG. 4 that the procedure is terminated when no operation or instruction is detected in the step S401, in the present embodiment of the communication type map display apparatus 1, the procedure returns to the starting step shown in FIG. 4 and an input instruction from the inputting unit 11 is continuously polled when no operation or instruction is detected in the step S401 unless it is instructed by the operator by means of inputting means, not shown, to terminate the system.

When the operation or instruction is detected in the step S401, the display area calculating means 1511 is operated to determine a center position of the map to be displayed based on the input instruction signal inputted through the inputting unit 11 and an area of the map currently displayed by the display unit 14, calculate a range of a display area of the map to be displayed based on the center position, a scale factor, and a size of the screen, and output the range of the display area thus calculated to the retained area judging means 1512 (step S402).

The retained area judging means 1512 forming part of the map data managing means 151 is operated to access the storage unit 13 and read the management data elements 131 from the storage unit 13, and judge whether or not the map data corresponding to the range of the display area is stored in the storage unit 13 based on the management data elements 131 thus read (step S403). When it is judged that the map data corresponding to the display area is stored in the storage unit 13, the procedure goes forward to the step S406. When, on the other hand, it is judged that the map data corresponding to the display area is not stored in the storage unit 13, the procedure goes forward to the step S404.

In the step S403, it is assumed that, for example, the size of the display area is equal to or smaller than that of each of the areas respectively corresponding to the map data elements 132 stored in the storage unit 13, the area information 131C of each of the management data elements 131 as shown in FIG. 3 is searched with regard to each of coordinate points forming a frame defining the display area, and it is judged whether or not the map data corresponding to the range of the display area having the coordinate points is provided in the map data elements 132 stored in the storage unit 13.

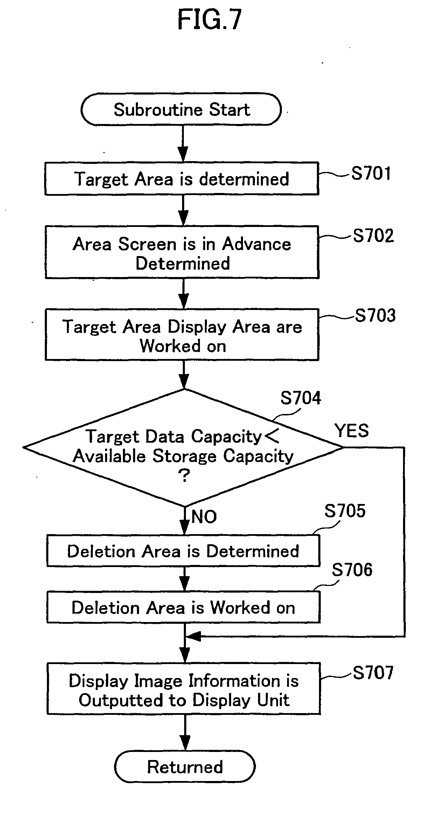

When it is judged in the step S403 that the map data corresponding to the range of the display area is not provided in the storage unit 13, the area screen generating means 153 is operated to generate area screen data to be displayed by the display unit 14 (step S404). FIG. 6 is a diagram showing a display image of the "area screen" thus displayed. The display image of the area screen shown in FIG. 6 is an example of the display image of the area screen displayed when the display area 601 displayed until just before in the map screen, for example, as shown in FIG. 5 is scrolled to be moved rightward. The process carried out in the step S404 of generating the area screen will be later described in detail with reference to FIG. 7.

When the process of generating the area screen is completed in the step S404, the control unit 15 is operated to send to the communication unit 12 a map obtaining instruction signal to obtain map data not provided in the storage unit 13 but required to display the map screen, the communication unit 12 is operated to obtain the map data by means of communication, and then the control unit 15 is operated to obtain from the communication unit 12 the map data to be stored in the storage unit 13 (step S405).

When it is, on the other hand, judged in the step S403 that the map data required to display the map screen is provided in the storage unit 13, or when the map data not provided in the storage unit is obtained by means of communication in the step S405, the control unit 15 is operated to output the map data required to display the map screen to the map screen generating means 152, and that the map screen generating means 152 is operated to generate map screen data to be outputted to the display unit 14 (step S406), and the display unit 14 is operated to display the map screen. An example of the map screen displayed as a result of the above described processes is shown in FIG. 5.

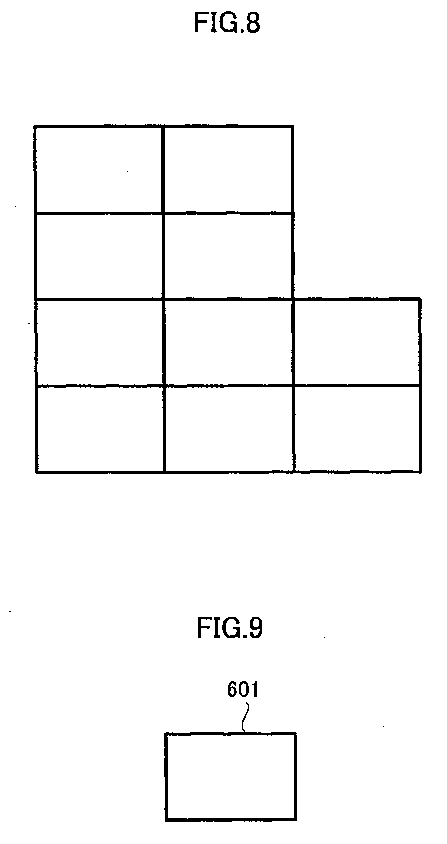

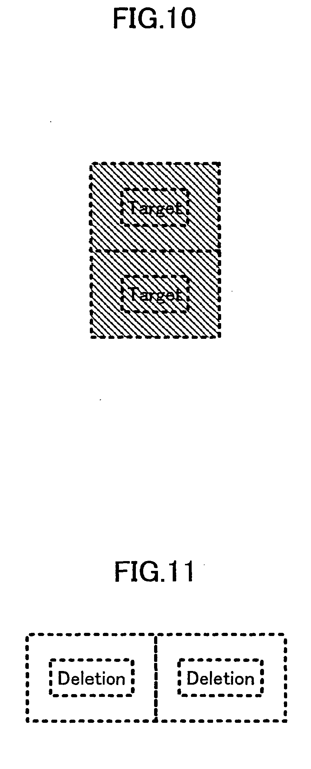

The process of generating the area screen will be described in detail hereinlater with reference to the drawings. FIG. 7 is a flow chart explaining in detail the process of generating area screen data carried out in the step S404. It is to be noted that FIG. 7 is the flow chart simply explaining an example of the area screen generating process carried out by the control unit 15 forming part of the present embodiment of the communication type map display apparatus according to the present invention, but this does not limit the area screen generating process carried out by the control unit forming part of the communication type map display apparatus according to the present invention. It is further to be noted that FIG. 6, FIGS. 8 to 15 are respectively diagrams explaining display images of the area screen. It is hereinlater assumed that the area screen, for example, as shown in FIG. 6 is generated as a result of the area screen generating process. It is further assumed that the area screen shown in FIG. 6 is composed of a retained area shown in FIG. 8, a display area 601 displayed until just before in a map screen shown in FIG. 9, a target area (an area corresponding to map data to be obtained) shown in FIG. 10, and a deletion area (an area corresponding to map data to be deleted) shown in FIG. 11.

The control unit 15 is operated to determine area information on the map data corresponding to the target area, and determine data capacity information on the map data corresponding to the target area (step S701). The area information of the target area will be used in the following step S702 to determine a size of a frame for each of the areas before generating an area screen, and the data capacity information is required to determine the number of map data elements already obtained and stored but to be deleted before storing the map data elements and the like corresponding to the target area. In the concrete, examples of a method of determining area information and data capacity information will be described hereinlater.
(1) A first example of the method comprises the steps of: (a1) dividing an area corresponding to the map data indicative of a map represented by latitude and longitude into a plurality of mesh-shaped small areas respectively aligned on after another at predetermined distances; (a2) storing information on each of the mesh-shaped small areas (for example, latitude and longitude of a center position or a right upper corner and a left lower corner, and a scale factor of each of the small area) thus obtained in the map servers 3a to 3n and the storage unit 13 as area information; (a3) storing information on each of the areas specified by the area information in the map servers 3a to 3n and the storage unit 13; (a4) selecting and determining the area information on the map data corresponding to the target area from among the data stored in the storage unit 13; and (a5) determining data capacity information corresponding to the map data of the target area based on an available storage capacity of the storage unit 13.
(2) A second example of the method comprises the steps of: (b1) variably dividing entire map data stored in the map servers 3a to 3n into a plurality of map data elements each representing a predetermined small area; (b2) storing management data elements respectively corresponding to the map data elements representing the small areas (divided areas) in the map servers 3a to 3n and the storage unit 13 as area information; and (b3) selecting and determining area information on the map data corresponding to the target area from among the data stored in the storage unit 13. This method is advantageous in that the area information on the target area can be promptly obtained as well as available storage capacity of the storage unit 13 can be effectively used resulting from the fact that both the area information on all of the areas and the data capacity information of the map data elements corresponding to all of the small areas are available. This method is, on the other hand, disadvantageous in that the storage unit 13 is required to have a storage capacity capable of storing therein the area information of all of the areas and the data capacity information on the map data elements corresponding to all of the small areas.
(3) A third example of the method comprises the steps of: (c1) transmitting information specifying a map data element corresponding to the required area, such as, for example, latitude and longitude of a center position of the area, information on a range of the area, and a scale factor of the area, to the map servers 3a to 3n; (c2) receiving a management data element corresponding to the map data element from the map servers 3a to 3n; and (c3) determining the area information and data capacity information on the map data element corresponding to the target area based on the management data element thus received. This method is advantageous in that the storage unit 13 can save available storage capacity because of the fact that the storage unit 13 is not required to store therein management data elements other than those corresponding to the retained area. This method is, on the other hand, disadvantageous in that a time necessary to communicate with the map servers 3a to 3n is increased because of the fact that the management data elements are required to be received.

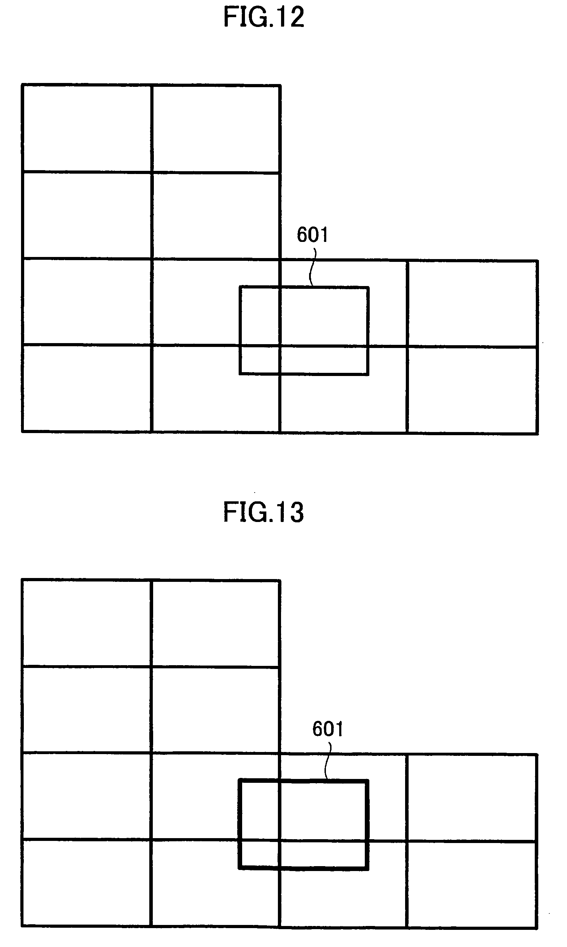

The map management means 151 is operated to output, to the area screen generating means 153, the area information 131C (see FIG. 3) of all of the management data elements (see FIG. 2) stored in the storage unit 13, the area information of a display area displayed until just before in a map screen, and the area information on the target area determined in the step S701 in a distinguishable manner. The area screen generating means 153 is operated to determine a shape (size) of a frame forming each of the areas so that all of the areas can be displayed in one screen, before generating area screen data (step S702). A display image of the area screen to be indicated on the basis of the area screen data thus generated in the step S702 is shown in FIG. 12.

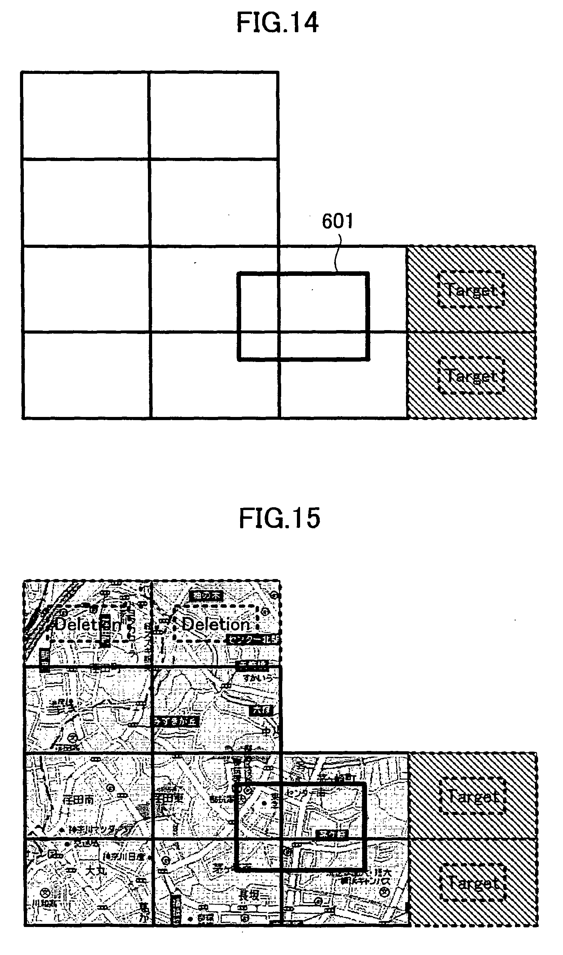

After the area screen data is generated in the step S702, the area screen generating means 153 is operated to further work on the area screen data in order that the display area displayed until just before in the map screen will be distinctively displayed as well as the target area will be indicated as being distinct from the retained area (step S703). Here, the area screen data can be further worked on, for example, in such a manner that the display area displayed until just before in the map screen, the target area, and the retained area will be indicated differently from one another in color, line style, plane texture, or the like, or the target area will be indicated as having, in its center, a symbol mark representative of the target area. FIG. 13 shows a display image of the area screen thus worked on in such a manner that the display area displayed until just before in the map screen is distinctively displayed, and FIG. 14 shows a display image of the area screen further worked on in such a manner that the target area and the retained area are indicated differently from each other.

When the process of working on the area screen data is completed in the step S703, the available storage capacity judging means 1513 is operated to judge whether or not there is an available storage capacity in the storage unit 13 for storing map data elements to be obtained (step S704). When it is judged that there is an available storage capacity in the storage unit 13, the procedure goes forward to the step S707. When it is, on the other hand, judged that there is no available storage capacity in the storage unit 13, the procedure goes forward to the step S705.

When it is judged in the step S704 that there is no available storage capacity in the storage unit 13, the deletion managing means 1514 is operated to access the storage unit 13 and read the deletion order information 131D shown in FIG. 3 to determine a deletion area corresponding to the map data to be deleted, hereinlater simply referred to as "deletion area of the map data" in priority order of the map data to be deleted (step S705). Here, the deletion area of the map data is determined based on the area information 131C. This means that the deletion managing means 1514 is operated to determine map data elements to be deleted one after another in priority order of the map data to be deleted as long as the total amount of the data capacity of the map data elements to be deleted does not exceed the total amount of the data capacity of the map data elements to be obtained. The deletion managing means 1514 is operated to determine, as the deletion area of the map data, the map data elements to be deleted so far determined until the total amount of the data capacity of the map data elements to be deleted exceeds the total amount of the data capacity of the map data elements to be obtained.

When the deletion area is determined in the step S705, the area screen generating means 153 is operated to work on the area screen data in order that the deletion area will be indicated as being distinct from the retained area, the target area, and the display area displayed until just before in the map screen (step S706). In the step S706, the area screen data can be further worked on, for example, in such a manner that the deletion area, the retained area, the target area, and the display area displayed until just before in the map screen will be indicated differently from one another in color, line style, plane texture, or the like, or the deletion area will be indicated as having, in its center, a symbol mark representative of the deletion area, similar to the process carried out in the step S703, in which the area screen data was worked on with regard to the display area displayed until just before in the map screen. FIG. 6 shows a display image to be displayed based on the area screen data thus worked on in the step S706.

According to the present invention, conditions required to generate area screen data are (1) the deletion area, the target area, the display area displayed until just before in the map screen, and the retained area are distinctively recognized and (2) frame-shaped boundary of each of the aforementioned areas is distinctively recognized. It is needless to mention that additional functions or features may be provided in accordance with display performance of hardware. In the case that display processing performance is high; the area screen data may be generated in the following manner. In the concrete, map data elements corresponding to the retained area can be transmitted from the map data managing means 151 to the area screen generating means 153 in the step S702 so that the map can be displayed on a reduced scale in a corresponding frame. Further, a map of the deletion area can be displayed on a reduced scale as having, in its center, a symbol mark representative of the deletion area, or with plane texture having a predetermined degree of transparency in the step S706. FIG. 15 shows an example a display image of the area screen thus made in such a manner that the symbol mark and the like are overwritten on the map indicated on a reduced scale.

The area screen generating means 153 is operated to output the area screen data indicative of an area screen as shown in, for example, FIG. 6 to the display unit 14 (step S707), and the procedure of generating an area screen is terminated. The display unit 14 is operated to receive the area screen data and display an area screen.

As will be seen from the foregoing description, it will be understood that the present embodiment of the communication type map display apparatus permits an operator to confirm an area to be displayed based on map data elements while the map data elements are being obtained, and thus efficiently utilize time to be elapsed until all of the map data elements are obtained, resulting from the fact that the target area, the display area displayed until just before in the map screen, and the retained area are distinctively displayed in the case that map data elements required to display a particular target area are not stored in the storage unit 13, and area screen data indicative that the deletion area is distinctively indicated is generated and the area screen is displayed by the display unit 14 before the required map data elements are obtained by way of communication under the control of the control unit 15 in the case that the data capacity of the map data elements corresponding to the target area exceeds a currently available storage capacity.

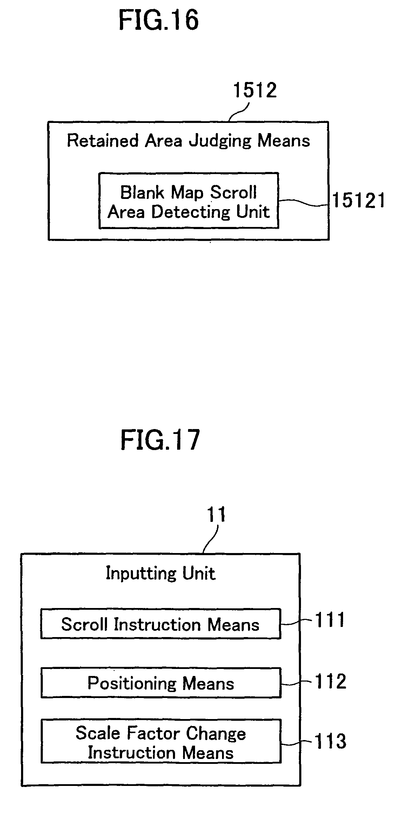

Further, the map screen generating means 152 forming part of the control unit 15 is operative to generate blank map data indicative of a blank map for an area to be scrolled in the case that map data elements indicative of the area to be scrolled is not stored in the storage unit 13, and the retained area judging means 1512 includes a blank map scroll area detecting unit 15121 for detecting a blank map area to be indicated based on the map screen data including the blank map data, and judge whether or not the blank map area is larger in area than a predetermined value as clearly seen from FIG. 16. The control unit 15 is operative to control the communication unit 12 to obtain map data elements indicative of the area shown as the blank map through the communication unit 12 in the case that the blank map scroll area detecting unit 15121 judges that the blank map area becomes larger in area than the predetermined value as a result of scrolling. Here, the blank map may be represented by a character such as, for example, "Not Retained" indicating that map data elements indicative of the area are not stored in the storage unit 13, or a graphic bordered with a boundary line, but filled with a color space the same as its background. Further, the blank map may be a simple map represented by major landmarks such as, for example, sea coast, river, and the like, and blank map data elements indicative of the blank map may be in advance stored in the storage unit 13, or obtained through the communication unit 12.

Here, the map screen generating means 152 includes a blank map data generating section for generating blank map data indicative of the blank map, and the blank map scroll area detecting unit 15121 includes a blank map area detecting unit for detecting a blank map area to be indicated based on the map screen data generated by the map screen data generating unit on the basis of the blank map data in the map screen displayed by the display unit 14.

In the concrete, the blank map may be displayed for an area where map data required to display the area is not provided in the storage unit 13 in the step S406, and in place of the process carried out in the aforementioned step S403, the procedure may go forward to the step S404 when the blank map scroll area detecting unit 15121 is operated to judge that the condition is satisfied, otherwise, the procedure may go forward to the step S406. The communication type map display apparatus thus constructed can prevent an operator from inadvertently scrolling a screen out of the retained area and unintentionally obtaining data by means of communication, thereby being reduced in operation errors.

The inputting unit 11 includes scroll instruction means 111 constituted by a button, and the like, permitting an operator to input a scrolling instruction. In addition, the inputting unit 11 may further include positioning means 112 for detecting a current position as clearly seen from FIG. 17. The communication type map display apparatus thus constructed can scroll the screen in accordance with the current position detected by the positioning means 112, for example, in place of the instruction inputted through the inputting uni11.

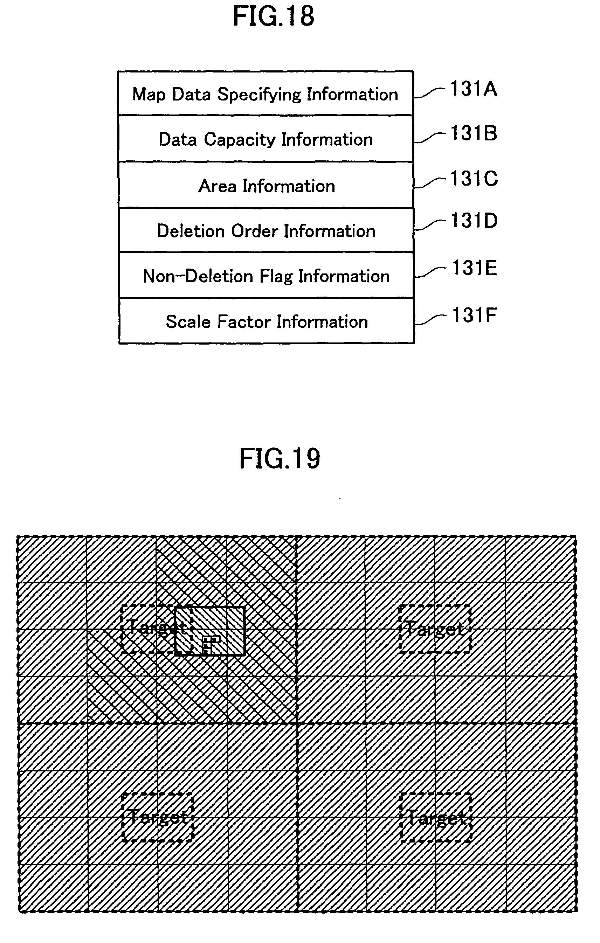

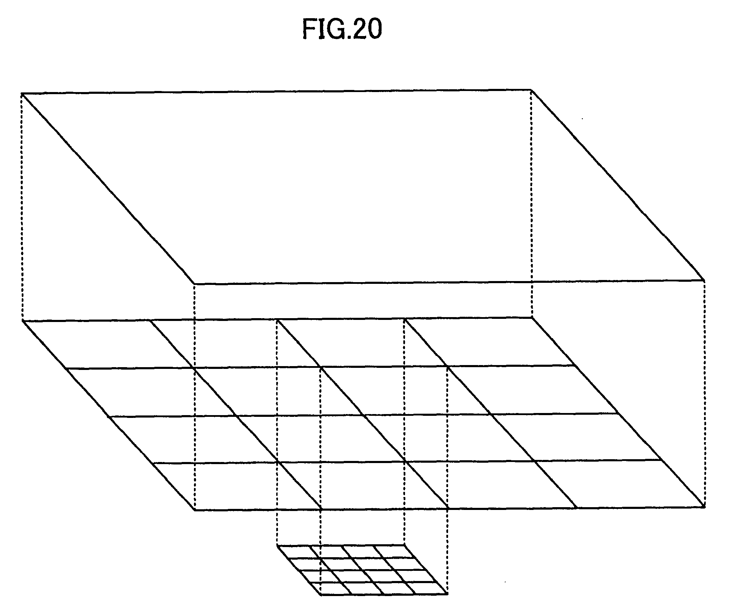

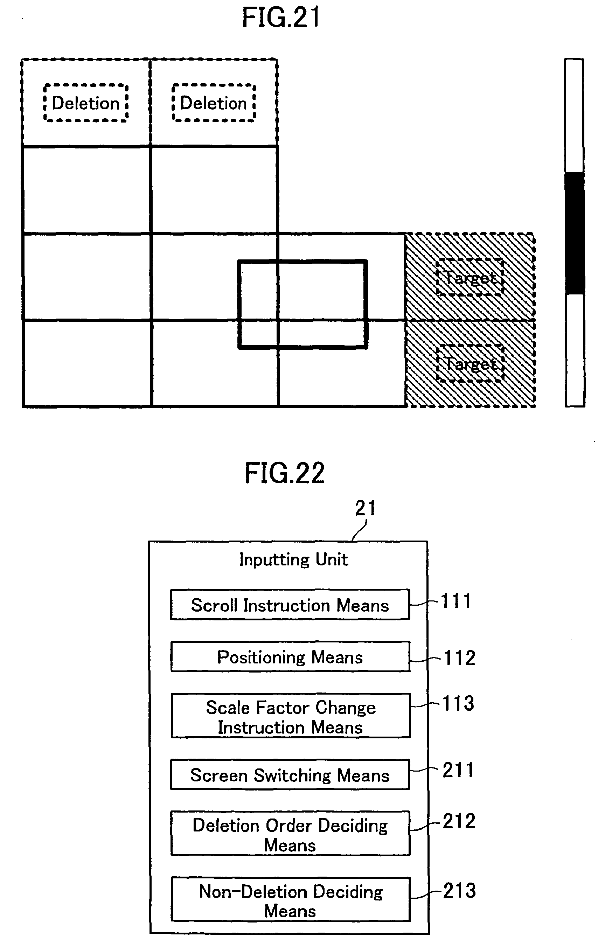

Further, each of the management data elements forming part of the map data stored in the storage unit 13 may further include scale factor information 131F as shown in FIG. 18, so that map areas can be relatively recognized, for example, in such a manner that each of the retained areas is indicated as having a plurality of hierarchies as shown in FIG. 19 and FIG. 20 (FIG. 20 shows a display image before the map data is worked on). In addition, the inputting unit 11 may further include scale factor change instruction means 113 as shown in FIG. 17, so that an area of a hierarchy can be indicated as having a bar representative of the hierarchy with a scale factor changed after operating the scale factor change instruction means 113 as clearly seen from FIG. 21, for example, in such a manner that the scale factor of the area can be further changeable by operating the scale factor change instruction means 113 even on the area screen. In this case, the scale factor of the area screen may be, for example, a scale factor of the target area, a scale factor of the map screen displayed until just before, or a scale factor of the deletion area. Further, when there are provided a plurality of deletion areas different in scale factor from one another, the scale factor of any one of the deletion areas may be indicated.

FIG. 19 shows a display area composed of four target areas and a plurality of deletion areas poor in visibility in comparison with the target areas. The area screen thus shown makes it easy for an operator to specify each of the target areas. The area screen, on the other hand, makes it difficult for the operator to specify each of the deletion areas. Contrary to the above, when the deletion areas are indicated with an enlarged scale factor to a degree that the deletion areas almost occupy the display area, the area screen thus shown makes it difficult for an operator to comprehend the display area as a whole. In order to solve this problem, the scale factor change instruction means 113 is provided to ensure that the scale factor of each of the areas forming part of the area screen can be changed.

While it has been described in the above that (1) shape and size of a frame forming each of the areas is determined so that all of the areas can be displayed in one screen as shown in FIG. 19 or FIG. 20 in the step S702, (2) each of an area may be indicated as having a bar representative of the area with a scale factor as shown in FIG. 21 so that the scale factor of the area can be specified and thus changed after operating the bar in such a manner the area can be displayed in one screen with the specified scale factor because of the fact that each of the areas may become poor in visibility if too many areas are displayed in one screen and all of the areas are indicated with extremely reduced scale factor, or (3) minimum shape and size of a frame forming each of the areas may be in advance determined so that the frame forming each of the areas is ensured in visibility in such a manner that whole of the areas can be seen by scrolling the area screen.

As will be seen from the foregoing description, it is to be understood that the present embodiment of the communication type map display apparatus according to the present invention can permit an operator to confirm a target area while obtaining the map data elements, and thus prevent redundant communication and eliminate the unnecessary communication costs, resulting from the fact that the present embodiment of the communication type map display apparatus is operative to display the area screen represented by frame-shaped areas each indicative of the retained areas corresponding to the map data elements already stored in the storage unit before the map data elements are obtained from an exterior device.

Further, the present embodiment of the communication type map display apparatus according to the present invention can permit an operator to confirm a deletion area while obtaining the map data elements, and thus prevent redundant communication and eliminate the unnecessary communication costs, resulting from the fact that the present embodiment of the communication type map display apparatus is operative to display the area screen represented by frame-shaped areas each indicative of the deletion areas or the retained areas corresponding to the map data elements already stored in the storage unit before the map data elements are obtained from an exterior device.

Still further, the present embodiment of the communication type map display apparatus according to the present invention can permit an operator to confirm a target area and a deletion area while obtaining the map data elements, and thus prevent redundant communication and eliminate the unnecessary communication costs.

Further the more, the present embodiment of the communication type map display apparatus according to the present invention can permit an operator to further distinctively recognize frame-shaped areas forming the display area displayed until just before in the map screen, on the area screen on which the target area and the deletion area are distinctively indicated, thereby being improved in operability.

Further the more, the present embodiment of the communication type display apparatus according to the present invention can still display the area screen even though the current position is moved to an area where no map data elements corresponding to the area are stored in the storage unit, thereby being improved in operability.

Further the more, the present embodiment of the communication type display apparatus according to the present invention can still display the area screen even though, in response to the scrolling instruction, the display area is moved to an area where no map data elements corresponding to the area are stored in the storage unit, thereby being improved in operability.

Further the more, the present embodiment of the communication type display apparatus according to the present invention can prevent redundant communication and eliminate the unnecessary communication costs, resulting from the fact that the present embodiment of the communication type map display apparatus can instruct not to scroll toward a blank map area any more to prevent unnecessary map data elements from being obtained when an operator does not desire to obtain the map data elements by means of communication.

Further the more, the present embodiment of the communication type display apparatus according to the present invention can display areas distinctively although retained areas corresponding to map data elements stored in the storage unit are too many, thereby being improved in operability.

Further the more, the present embodiment of the communication type display apparatus according to the present invention may display an area screen in another window provided on a map screen while the map screen is displayed. The fact that that the area screen is indicated in another window provided on the map screen while the map screen is displayed leads to the fact that the present embodiment of the communication type display apparatus thus constructed can display both the map screen and the area screen, thereby being improved in operability.

### (Second Preferred Embodiment)

The description hereinlater will be directed to a second embodiment of the communication type map display apparatus according to the present invention with reference to FIG. 1 and FIG. 22. The constructions of the present embodiment of the communication type map display apparatus according to the present invention and a transmitting and receiving system including the present embodiment of the communication type map display apparatus are almost the same as those of the first embodiment of the communication type map display apparatus and the transmitting and receiving system including the first embodiment of the communication type map display apparatus (see FIG. 1), and will thus not be described hereinafter.

FIG. 22 is a block diagram showing another example of an inputting unit other than the inputting unit 11 forming part of the first embodiment of the communication type map display apparatus 1. The inputting unit 21 forming part of the present embodiment of the communication type map display apparatus includes a screen switching means 211 for switching from a map screen to an area screen which permits an operator to confirm a deletion order, and vice versa, deletion order deciding means 212 for inputting a deletion order of an area, and non-deletion deciding means 213 for inputting an instruction that an area is not to be deleted.

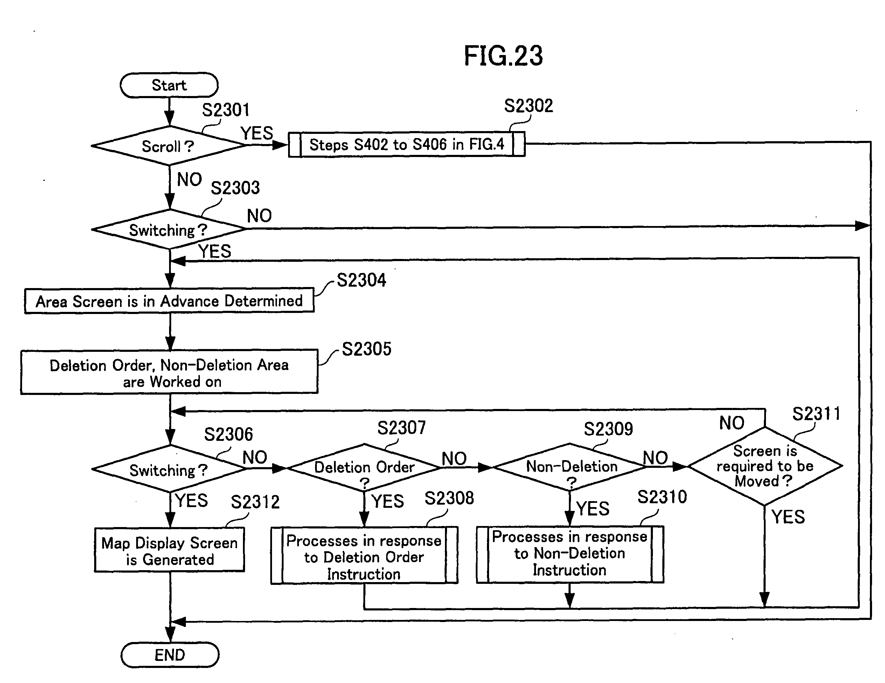

The operation of the present embodiment of the communication type map display apparatus according to the present invention will be described hereinlater with reference to the drawings. FIG. 23 is a flow chart explaining processes carried out by the present embodiment of the communication type map display apparatus according to the present invention. It is to be noted that FIG. 23 is a flow chart simply explaining an example of processes carried out by the present embodiment of the communication type map display apparatus according to the present invention but this does not limit the processes carried out by the present embodiment of the communication type map display apparatus according to the present invention.

The control unit 15 is operated to judge whether or not an instruction of scrolling or changing a scale factor is inputted through the inputting unit 21 (step S2301). When it is judged that the instruction is inputted, the procedure goes forward to the step S2302. When, on the other hand, it is judged that the instruction is not inputted, the procedure goes forward to the step S2303. It is hereinlater assumed that data will be obtained by means of communication in the case that the instruction of changing a scale factor is inputted but map data required to indicate areas after the scale factor is changed is not stored in the storage unit 13.

When it is judged that the instruction of scrolling or changing a scale factor is inputted through the inputting unit 21, the processes in the step S402 to the step S406 (see FIG. 4) will be carried out (step S2302), and then the procedure will be terminated. Here, it is assumed in the present embodiment that the procedure returns to the starting step shown in FIG. 23 and an instruction inputted from the inputting unit 21 is continuously polled when no operation or instruction is detected unless it is instructed by the operator by means of inputting means, not shown, to terminate the system, similar to the processed described in the first embodiment.

When it is judged that the instruction of switching a screen is inputted through the inputting means 211, the procedure goes forward to the step S2304, when, on the other hand, it is judged that the instruction of switching a screen is not inputted, the procedure is terminated (step S2303). Here, it is assumed that an operation of switching a screen in the step S2303 is intended to mean to switch from the map screen to the area screen.

When it is judged in the step S2303 that the instruction of switching a screen is inputted through the inputting means 211, the map data managing means 151 is operated to output the area information 131C (see FIG. 3) of all of the managing data elements (see FIG. 2) stored in the storage unit 13 and information required to identify the display area displayed until just before in the map screen, to the area screen generating means 153, and the area screen generating means 153 is operated to determine a size of a frame forming each of the areas so that all of the areas can be displayed in one screen, and generate area screen data in such a manner that the display area displayed until just before in the map screen will be distinctively indicated (step S2304). It is herein assumed that the scale factor of the area screen is the same as that of the area screen as described in the first embodiment.

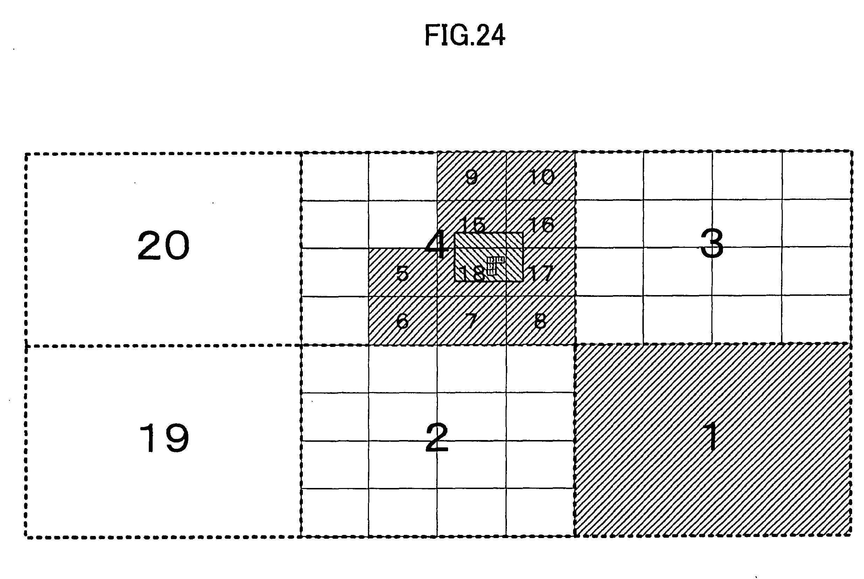

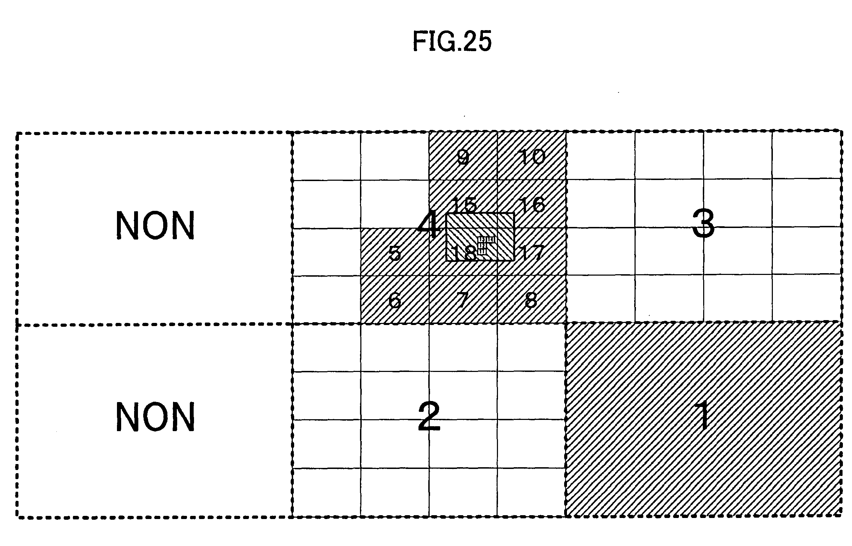

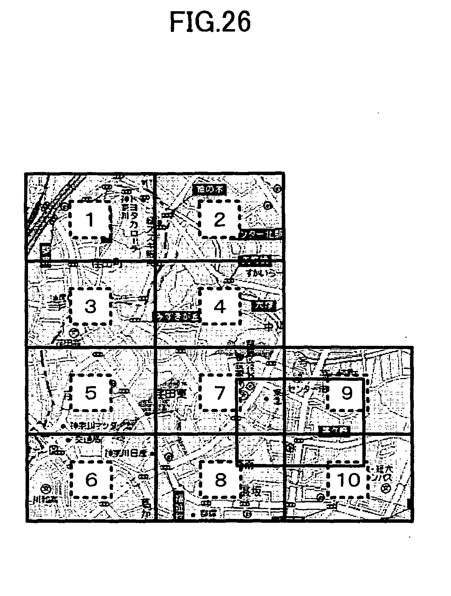

The area screen generating means 153 is then operated to further work on the area screen data so that retained areas to be deleted are distinctively indicated in a deletion order as well as non-deletion areas are indicated as being distinct from deletion areas (step S2305). There are provided various methods for indicating retained areas to be deleted distinctively in a deletion order as well as indicating non-deletion areas as being distinct from the deletion areas. One example of the method is, for example, marking a center of each of the retained areas to be deleted by a number indicative of a deletion order, and a center of each of the non-deletion areas by a symbol mark indicative of non-deletion area. The display image of the area screen displayed on the basis of the area screen data generated through the above method is shown in FIG. 24, FIG. 25, and FIG. 26. As the symbol mark indicative of non-deletion area may be used, for example, "NON" as clearly seen from FIG. 25.

In addition, a deletion order of the areas and non-deletion areas are selected by an operator by operating, for example, the left button, the right button, the upper button, and the lower button forming part of the inputting unit 21 in a manner as will be described hereinlater. It is hereinlater assumed that the cursor is indicated with a size the same as that of each of the areas (the cursor will be hereinlater referred to as "area-sized cursor"). The area screen data may be worked on, for example, so that the area-sized cursor can be moved from one area to another by operating the aforementioned buttons to have an area specified in such a manner the area where the area-sized cursor is placed is indicated as being different from the other areas in color, line style, a plane texture, or the like, or displayed as having a symbol mark representative of the specified area.

Further, the area-sized cursor may be moved from one deletion area to another in the deletion order at predetermined time intervals in such a manner that the deletion area where the area-sized cursor is placed is indicated differently from the other areas in color, line style, a plane texture, or the like, or displayed as having a symbol mark representative of the deletion area. In this case, the non-deletion areas may be indicated at the end of the procedure. In the event that all of the areas are once indicated, after a predetermined relatively long time interval, the areas may be again indicated one after another in the deletion order as described in the above. The deletion order deciding means 212 may include a deletion order restart button, in order that the retained areas may be indicated one after another again from the beginning of the deletion order whenever the deletion order restart button is pressed down.

Yet further, the deletion order deciding means 212 may include deletion area order confirming means, in order that the target areas are indicated one after another in the deletion order as being distinct from the other areas whenever the deletion area order confirming means is pressed down. In this case, the non-deletion areas may be indicated at the end of the procedure.

When the process of working on the area screen data so that the deletion order and the non-deletion areas will be indicated in an area screen to be displayed is completed in the step S2305, it is judged whether or not an instruction of switching a screen is inputted through the screen switching means 211 forming part of the inputting unit 21(step S2306). When it is judged that the instruction is inputted, the procedure goes forward to the step S2312, in which a map display screen is generated. When, on the other hand, it is judged that the instruction is not inputted, the procedure goes forward to the step S2307. Here, an operation of switching a screen in the step S2306 is assumed to switch from the area screen to the map screen.

When it is judged in the step S2306 that the instruction of switching a screen is not inputted, it is further judged whether or not an instruction of deciding a deletion order is inputted through the deletion order deciding means 212 forming part of the inputting unit 21 (step S2307). When it is judged that the instruction is inputted, the procedure goes forward to the step S2308, in which a process of instructing the deletion order is carried out. When, on the other hand, it is judged that the instruction is not inputted, the procedure goes forward to the step S2309. In the step S2308, the deletion managing means 1514 forming part of the map data managing means 151 is operated to update the deletion order information 131D (see FIG. 3) of each of the management data elements. When the process in the step S2308 is completed, the procedure returns to the step S2304.

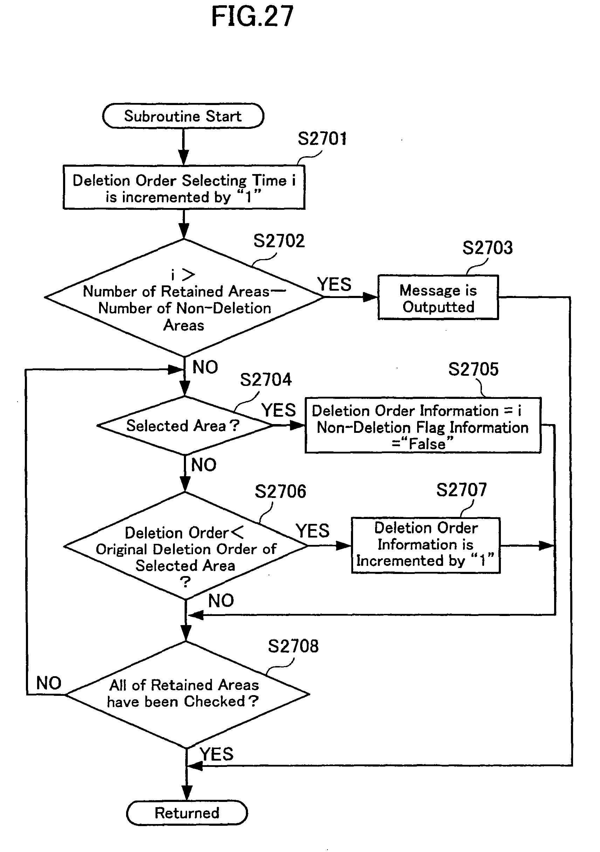

In the step S2308, the deletion order is updated after the deletion order information 131D of each of the management data elements corresponding to the area where the area-sized cursor selected by the deletion order deciding means 212 is placed, hereinlater simply referred to as a "selected area" is updated. Each of the deletion areas is assigned to a number indicative of the deletion order, starting from one. This means that the deletion order of each of the deletion areas whose numbers are aligned between the old number and the updated number of the selected deletion area is incremented by one. The details will be described later with reference to FIG. 27.

When it is judged that that the instruction of the deletion order is not inputted in the step S2307, it is further judged whether or not an instruction that an area is not to be deleted is inputted through the non-deletion deciding means 213 (step S2309). When it is judged that the instruction that an area is not to be deleted is inputted, the procedure goes to the step S2310, in which a process of instructing non-deletion is carried out. When, on the other hand, it is judged that the instruction is not inputted, the procedure goes forward to the step S2311. In the step S2310, the deletion managing means 1514 forming part of the map data managing means 151 is operated to update the non-deletion flag information 131E (see FIG. 3) and the deletion order information 131D of each of the management data elements. When the process in the step S2310 is completed, the procedure returns to the step S2304.

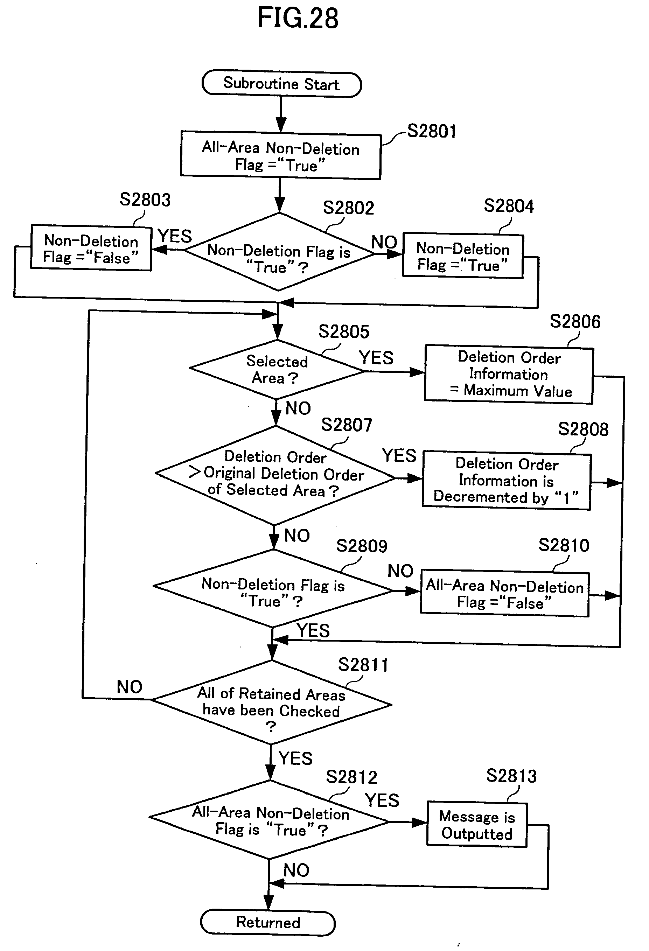

In the step S2310, the non-deletion flag information 131E is updated as follows. The non-deletion flag information 131E is updated to "true" when the non-deletion flag information 131E corresponding to the area where the area-sized cursor selected through the non-deletion deciding means 213 is placed is "false". The non-deletion flag information 131E, on the other hand, is updated to "false" and the deletion order of each of the deletion areas whose numbers are greater than the number originally assigned to the selected area is decremented by one when the non-deletion flag information 131E corresponding to the area is "true". The details will be described later with reference to FIG. 28.

When, on the other hand, it is judged in the step S2306 that the instruction is not inputted through the screen switching means 211, it is judged in the step S2307 that the instruction is not inputted through the deletion order deciding means 212, and it is judged in the step S2309 that the instruction is not inputted through the non-deletion deciding means 213, it is judged whether or not a screen is required to be moved (step S2311). When it is judged that the screen is required to be moved, the procedure returns to the step S2304, and an appropriate process is carried out in the step S2304. When, on the other hand, it is judged that the screen is not required to be moved, the procedure returns to the step S2306, and the processes as described in the above are repeated.

In the step S2311, "true" or "false" ("YES" or "NO") is judged in a manner as follows. It is judged as being true ("YES") when the input instruction signal is detected from the inputting unit 21, and as being false ("NO") when, on the other hand, the input instruction signal is not detected under the condition that the area-sized cursor is moved by an operator operating the inputting unit 21. Further, it is judged as being true ("YES") when a time required to move the screen has elapsed, and as being false ("NO") when the time required to move the screen has not yet elapsed under the condition that the area-sized cursor is automatically moved but not by an operator operating the inputting unit 21.

When it is judged in the step S2306 that the instruction of switching a screen is inputted, the control unit 15 is operated to output map data required to switch the screen to the map screen generating means 152, and the map screen generating means 152 is operated to generate map screen data to be outputted to the display unit 14 (step S2312). The map screen is then displayed by the display unit 14. Here, the map screen thus displayed may be the map screen of the display area displayed immediately before the area screen is displayed, or the area where the cursor is placed.

In addition, the inputting unit 21 may further include other inputting means such as, for example, a "return button" for making the display unit display the display area of the map screen displayed immediately before the area screen is displayed, a "map button" for making the display unit display the area where the cursor is placed, and the like. The communication type map display apparatus thus constructed makes it possible for an operator to confirm the map screen around the end of the retained area by simply operating the map button as well as to return to the map screen by operating the return button after the deletion order or non-deletion areas are decided in the case that there are map data elements desired to be obtained although the available storage capacity is insufficient, thereby increasing possible options to be offered to an operator.

The process carried out by the deletion managing means 1514 in the step S2308 shown in FIG. 23 will be described hereinlater with reference to FIG. 27. FIG. 27 is a flow chart explaining an example of a process to be carried out by the present embodiment of the communication type map display apparatus according to the present invention, but this does not limit the operation of the communication type map display apparatus according to the present invention. It is to be noted that deletion order selecting time **i** appearing hereinlater is intended to mean the number of times that the deletion order deciding means 212 is pressed down. It is further noted that the deletion order selecting time **i** is initialized at "zero" when the communication type map display apparatus is powered on, or when the process in the step S2312 is carried out after it is judged that the instruction is inputted through the screen switching means 211 in the step S2306 shown in FIG. 23.

When it is judged in the step S2307 that the instruction of deciding a deletion order is inputted through the deletion order deciding means 212 forming part of the inputting unit 21, the deletion order selecting time **i** representative of the number of times that the deletion order deciding means 212 is pressed down is incremented by one (step S2701).

It is judged whether or not the deletion order selecting time **i** representative of the number of times that the deletion order deciding means 212 is pressed down is greater than a value calculated as a result of subtracting the number of non-deletion areas from the number of the retained areas (step S2702). When it is judged that the deletion order selecting time **i** is greater than the value, the procedure goes forward to the step S2703. When, on the other hand, it is judged that the deletion order selecting time **i** is not greater than the value, the procedure goes forward to the step S2704.

When it is judged in the step S2702 that the deletion order selecting time **i** representative of the number of times that the deletion order deciding means 212 is pressed down is greater than the value calculated after subtracting the number of non-deletion areas from the number of the retained areas, a message indicative of the result of the judgment is outputted to the display unit 14 (step S2703). Thus, the fact that the deletion order selecting time **i** is greater than the value calculated after subtracting the number of non-deletion areas from the number of the retained areas leads to the fact that the all of the retained areas expect for the non-deletion areas are decided. This fact can be notified to an operator through the message displayed by the display unit 14.

When, on the other hand, it is judged in the step S2702 that the deletion order selecting time **i** is not greater than the value calculated after subtracting the number of non-deletion areas from the number of the retained areas, processes from the step S2704 to the step S2708 are carried out by the map data managing means 151 forming part of the control unit 15 on all of the retained areas. This means that the processes from the step S2704 to the step S2708 are repeatedly carried out on all of the retained areas.

In the step S2704, it is judged whether or not an object area is the selected area (step S2704). When it is judged that the object area is the selected area, the procedure goes forward to the step S2705. When, on the other hand, it is judged that the object area is not the selected area, the procedure goes forward to the step S2706.

When it is judged in the step S2704 that the object area is the selected area, the deletion order information 131D (see FIG. 3) of the management data element corresponding to the area is set at a value equal to **i** representative of the number of times that the deletion order deciding means 212 is pressed down, and the non-deletion flag information 131E (see FIG. 3) of the management data element corresponding to the area is set to "false" (step S2705). Then, the procedure goes forward to the step S2708. As described in the above, "**i**" appearing in the above is the number of times that the deletion order deciding means 212 is pressed down. This means that the deletion order information 131D is set at, for example, "1" in the case that the deletion order deciding means 212 is pressed down once, and the deletion order information 131D is set at, for example, "2" in the case that the deletion order deciding means 212 is pressed down twice (step S2705). Further, the fact that the deletion order is inputted results in the fact that the area specified in the deletion order is a deletion area. This leads to the fact that the non-deletion flag information 131E (see FIG. 3) is set to "false".

When it is judged in the step S2704 that the object area is not the selected area, it is judged whether or not the value of the deletion order information 131D corresponding to the object area is greater than the original value of the deletion order information 131D corresponding to the selected area (step S2706). When it is judged that the value corresponding to the object area is smaller than the original value corresponding to the selected area, the procedure goes forward to the step S2707. When, on the other hand, it is judged that the value corresponding to the object area is not smaller than the original value corresponding to the selected area, the procedure goes forward to the step S2708. Here, "the original value of the deletion order information 131D corresponding to the selected area" is intended to mean the value of the deletion order information 131D when the selected area is selected, and "the value of the deletion order information 131D is greater" is intended to mean that the deletion order is latter.

When it is judged in the step S2706 that the value of the deletion order information 131D corresponding to the object area is smaller than the original value of the deletion order information 131D corresponding to the selected area, the value of the deletion order information 131D corresponding to the object area is incremented by one (step S2707), and the procedure goes forward to the step S2708.

In the step S2708, it is judged whether or not the processes from the step S2704 to the step S2707 are carried out on all of the retained areas. When it is judged that the processes from the step S2704 to the step S2707 are not carried out on all of the retained areas, the procedure returns to the step S2704, and the processes from the step S2704 to the step S2707 are repeatedly carried out until the processes from the step S2704 to the step S2707 are carried out on all of the retained areas. When, on the other hand, it is judged that the processes from the step S2704 to the step S2707 are carried out on all of the retained areas, the procedure is terminated (step S2708).

As will be seen from the foregoing description, it will be appreciated that the deletion order information 131D corresponding to the area where the area-sized cursor selected by the deletion order deciding means 212 is placed (selected area) is assigned to a value, starting from one, and the deletion order information 131D corresponding to all of the retained areas stored in the storage unit 13 is checked and updated so that the value corresponding to the object area, viz. each of the retained areas smaller (higher in deletion priority) than the original value corresponding to the selected area is incremented by one (deletion priority of the area is lowered by one) whenever the deletion order information 131D corresponding to the selected area is assigned to the value.

The process carried out by the deletion managing means 1514 in the step S2310 shown in FIG. 23 when the non-deletion instruction is inputted will be described hereinlater with reference to FIG. 28. FIG. 28 is a flow chart explaining an example of a process to be carried out by the present embodiment of the communication type map display apparatus according to the present invention, but this does not limit the operation of the communication type map display apparatus according to the present invention.

When it is judged in the step S2309 that an instruction that an area is not to be deleted is inputted through the non-deletion deciding means 213, an all-area non-deletion flag is set to "true" (step S2801). Here, the all-area non-deletion flag is a flag used to output a message in order to draw operator's attention when all of the areas are set to non-deletion areas.

It is then judged weather or not the non-deletion flag information 131E is set to "true" or "false" (step S2802). When it is judged that the non-deletion flag information 131E is set to "true", the procedure goes forward to the step S2803, in which the non-deletion flag information 131E is set to "false". When, on the other hand, it is judged that the non-deletion flag information 131E is set to "false", the procedure goes forward to the step S2804, in which the non-deletion flag information 131E is set to "true". The procedure goes forward to the step S2805.

Then, processes from the step S2805 to the step S2811 are repeatedly carried out by the map data managing means 151 forming part of the control unit 15 on all of the retained areas.

In the step S2805, it is judged whether or not an object area is the selected area. When it is judged that the object area is the selected area, the procedure goes forward to the step S2806. When, on the other hand, it is judged that the object area is not the selected area, the procedure goes forward to the step S2807.

When it is judged in the step S2805 that the object area is the selected area, the deletion order information 131D corresponding to the area is set at a value equal to the number of the retained areas (step S2806), and the procedure goes forward to the step S2811. This means that the selected area is set to be the lowest in the deletion priority.

When, on the other hand, it is judged in the step S2805 that the object area is not the selected area, it is further judged whether or not the value of the deletion order information 131D corresponding to the object area is greater than the original value of the deletion order information 131D corresponding to the selected area (step S2807). When it is judged that the value corresponding to the object area is greater than the original value corresponding to the selected area, the procedure goes forward to the step S2808. When, on the other hand, it is judged that the value corresponding to the object area is not greater than the original value corresponding to the selected area, the procedure goes forward to the step S2809. Here, "the original value of the deletion order information 131D corresponding to the selected area" is intended to mean the value of the deletion order information 131D before the deletion order information 131D corresponding to the selected area is set at a value equal to the number of the retained areas, and "the value of the deletion order information 131D is greater" is intended to mean that the deletion order is latter.

When it is judged in the step S2807 that the value of the deletion order information 131D corresponding to the object area is greater than the original value of the deletion order information 131D corresponding to the selected area, the value of the deletion order information 131D corresponding to the object area is decremented by one (step S2808), and the procedure goes forward to the step S2811. Thus, the deletion order of each of the deletion areas whose deletion orders are latter than that of the selected area is decremented by one.

When it is judged in the step S2805 that the object area is not the selected area, and it is judged in the step S2807 that the value of the deletion order information 131D corresponding to the object area is not greater than the original value of the deletion order information 131D corresponding to the selected area, it is judged whether or not the non-deletion flag information 131E corresponding to the object area is set to "true" (step S2809). When it is judged that the non-deletion flag information 131E corresponding to the object area is set to "true", the procedure goes forward to the step S2811. When, on the other hand, it is judged that the non-deletion flag information 131E corresponding to the object area is set to "false", the procedure goes forward to the step S2810.

When it is judged in the step S2809 that the non-deletion flag information 131E corresponding to the object area is set to "false", an all-area non-deletion flag is set to "false" (step S2810), and the procedure goes forward to the step S2811. The all-area non-deletion flag is a flag used to output a message in order to draw operator's attention when all of the areas are set to non-deletion areas. The fact that it is judged in the step S2809 that the non-deletion flag information 131E corresponding to the object area is set to "false" results in the fact that the all-area non-deletion flag is set to "false", in order to notify that there is provided more than one deletion area.

Then it is judged whether or not the processes from the step 2805 to the step S810 are completed on all of the retained areas (S2811). When it is judged that the processes are not completed, the procedure returns to the step S2805. When, on the other hand, it is judged that all of the processes are completed, the procedure returns to the step S2812.

In the step S2812, it is judged whether or not the all-area non-deletion flag is set to "true". When it is judged that the all-area non-deletion flag is set to "false", the procedure is terminated. When, on the other hand, it is judged that the all-area non-deletion flag is set to "true", the procedure goes forward to the step S2813.

When it is judged in the step S2812 that the all-area non-deletion flag is set to "true", an message indicative that the all areas are set to non-deletion areas is outputted to the display unit 14 (step S2813), and the procedure is terminated. These processes as described hereinearlier make it possible to draw operator's attention.

From the foregoing description, it will be appreciated that in the step S2310 shown in FIG. 23 the non-deletion flag information 131E corresponding to the area where the area-sized cursor selected through the non-deletion deciding means 213 is placed (selected area) is updated to "true" when the non-deletion flag information 131E corresponding to the selected area is "false", and the non-deletion flag information 131E corresponding to selected area, on the other hand, is updated to "false" when the non-deletion flag information 131E corresponding to the selected area is "true", as well as the deletion order information 131 D corresponding to each of the retained areas stored in the storage unit 13 is checked and updated in such a manner the deletion order information 131D greater in value (lower in deletion priority) than the original value corresponding to the selected area is decremented by one (deletion priority of the area is increased by one), and an attention message is outputted to the display unit 14 in order to draw operator's attention in the case that all of the retained areas are eventually set to non-deletion areas.

As will be seen from the foregoing description, it will be appreciated that the present embodiment of the communication type map display apparatus according to the present invention can permit an operator to confirm the deletion order at any given time, thereby being improved in operability.

In addition, the present embodiment of the communication type map display apparatus is improved in operability resulting from the fact that the control unit enables the deletion order to be shown as a number in each of the retained areas and thus permits an operator to confirm the deletion order with the number.

Further, the present embodiment of the communication type map display apparatus is improved in operability resulting from the fact that the control unit enables the concerned retained areas to be indicated as being distinct from the other areas in the deletion order at predetermined time intervals, and thus permits an operator to confirm the deletion areas in the deletion order at the predetermined time intervals.

Yet further, the present embodiment of the communication type map display apparatus is improved in operability resulting from the fact that the inputting unit comprises deletion area order confirming means permitting an operator to confirm the deletion areas one after another with the result that the confirmed areas are indicated by the display unit as being distinct from the other areas, and thus enables an operator to set the deletion order every time each of the deletion areas is confirmed.

Further the more, the present embodiment of the communication type map display apparatus is improved in operability resulting from the fact that the inputting unit comprises deletion order deciding means for deciding the deletion order of an area in order that the deletion orders of the other areas are changed based on the deletion order of an area in the case that the deletion order of the area is decided, and thus enables an operator to change the deletion order of any area at any given time and confirm the result of the change.

Further the more, the present embodiment of the communication type map display apparatus is improved in operability resulting from the fact that the inputting unit comprises non-deletion deciding means for deciding an area not to be deleted, viz., a non-deletion area from among a plurality of areas in order that the deletion orders of the other areas are changed based on a non-deletion area in the case that the non-deletion area is decided through the non-deletion area deciding means, and thus enables an operator to select a non-deletion area and confirm the changed deletion order.

Further the more, the present embodiment of the communication type display apparatus according to the present invention may display an area screen in another window provided on a map screen while the map screen is displayed. The fact that that the area screen is indicated in another window provided on the map screen while the map screen is displayed leads to the fact that the present embodiment of the communication type display apparatus thus constructed can display both the map screen and the area screen, thereby being improved in operability.

### INDUSTRIAL APPLICABILITY OF THE PRESENT INVENTION

As will be seen from the foregoing description, it will be understood that the communication type display apparatus according to the present invention permits an operator to confirm a retained area while obtaining map data, and thus prevents unnecessary communication, thereby achieving an effect of eliminating the unnecessary communication costs, and being available as a communication type map display apparatus for obtaining map data through communication means, and displaying a map based on the map data thus obtained.

## Claims

1. A communication type map display apparatus, comprising:
an inputting unit for inputting an instruction;
a map data obtaining unit for communicating with a device exterior thereto to obtain map data;
a storage unit for storing said map data obtained by said map data obtaining unit;
an area screen data generating unit for generating area screen data to be used to confirm an area to be indicated based on said map data stored in said storage unit;
a map screen data generating unit for generating map screen data indicative of a map based on said map data stored in said storage unit; and
a display unit for displaying at least one of screens including an area screen based on said area screen data and a map screen based on said map screen data, and in which
said area screen data generating unit is operative to generate said area screen data in such a manner that an area of a map corresponding to said map data to be obtained by said map data obtaining unit and an area corresponding to said map data stored in said storage unit are recognized as being distinct from each other in said area screen under the condition that said instruction inputted by said inputting unit requests to obtain said map data.

2. A communication type map display apparatus, comprising;
an inputting unit for inputting an instruction;
a map data obtaining unit for communicating with a device exterior thereto to obtain map data;
a storage unit for storing said map data obtained by said map data obtaining unit;
an available storage capacity judging unit for judging whether or not there is an available storage capacity in said storage unit for storing said map data to be obtained by said map data obtaining unit;
a deletion data deciding unit for deciding map data to be deleted from said storage unit in the case that said available storage capacity judging unit judges that there is no available storage capacity for storing said map data to be obtained by said map data obtaining unit;
an area screen data generating unit for generating area screen data to be used to confirm an area to be indicated based on said map data stored in said storage unit;
a map screen data generating unit for generating map screen data indicative of a map based on said map data stored in said storage unit; and
a display unit for displaying at least one of screens including an area screen based on said area screen data and a map screen based on said map screen data, and in which
said area screen data generating unit is operative to generate said area screen data in such a manner that an area corresponding to said map data decided to be deleted by said deletion data deciding unit from said storage unit and an area corresponding to said map data stored in said storage unit are recognized as being distinct from each other in said area screen under the condition that said instruction inputted by said inputting unit requests to obtain said map data.

3. A communication type map display apparatus as set forth in claim 2, in which
said area screen data generating unit is operative to generate said area screen data in such a manner that an area of a map corresponding to said map data to be obtained by said map data obtaining unit is recognized as being further distinct in said area screen under the condition that said instruction inputted by said inputting unit requests to obtain said map data.

4. A communication type map display apparatus as set forth in claim 1, in which
said area screen data generating unit is operative to generate said area screen data in such a manner that an area corresponding to said map screen previously displayed by said display unit is recognized as being further distinct in said area screen.

5. A communication type map display apparatus as set forth in claim 1, in which
said inputting unit includes position detecting means for detecting a current position, and
said map data obtaining unit is operative to obtain map data indicative of an area including said current position under the condition that said map data indicative of said area including said current position is not stored in said storage unit.

6. A communication type map display apparatus as set forth in claim 1, in which
said map data obtaining unit is operative to obtain map data indicative of an area corresponding to a map screen to be scrolled and displayed by said display unit under the condition that said instruction inputted by said inputting unit requests to scroll said map screen displayed by said display unit, and said map data indicative of said map screen to be scrolled and displayed by said display unit is not stored in said storage unit.

7. A communication type map display apparatus as set forth in claim 1, in which
said map screen data generating unit includes a blank map data generating section for generating blank map data indicative of a blank map, and
said map screen data generating unit is operative to generate map screen data indicative of an area corresponding to a map screen to be scrolled and displayed by said display unit based on said blank map data generated by said blank map data generating section under the condition that said instruction inputted by said inputting unit requests to scroll said map screen displayed by said display unit, and said map data indicative of said map screen to be scrolled and displayed by said display unit is not stored in said storage unit.

8. A communication type map display apparatus as set forth in claim 7, which further comprises:
a blank map area detecting unit for detecting a blank map area indicated based on said map screen data generated by said map screen data generating unit on the basis of said blank map data in said map screen displayed by said display unit, and in which
said map data obtaining unit is operative to obtain map data corresponding to said blank map area under the condition that said blank map area is larger in area than a predetermined value.

9. A communication type map display apparatus as set forth in claim 1, in which
said area screen data generating unit is operative to generate area screen data based on a scale size, and said map screen data generating unit is operative to generate map screen data based on said scale size under the condition that said instruction inputted by said inputting unit requests to change the scale sizes of said area screen and said map screen displayed by said display unit.

10. A communication type map display apparatus, comprising:
an inputting unit for inputting an instruction;
a map data obtaining unit for communicating with a device exterior thereto to obtain map data;
a storage unit for storing said map data obtained by said map data obtaining unit;
a deletion order deciding unit for deciding an order of map data to be deleted from said storage unit in the case that there is no available storage capacity for storing said map data to be obtained by said map data obtaining unit;
an area screen data generating unit for generating area screen data to be used to confirm an area to be indicated based on said map data stored in said storage unit;
a map screen data generating unit for generating map screen data indicative of a map based on said map data stored in said storage unit; and
a display unit for displaying at least one of screens including an area screen based on said area screen data and a map screen based on said map screen data, and in which
said area screen data generating unit is operative to generate said area screen data in such a manner that said order of map data to be deleted decided by said deletion order deciding unit is recognized as being distinct in said area screen under the condition that said instruction inputted by said inputting unit requests to switch said screen displayed by said map screen from said map screen to said area screen.

11. A communication type map display apparatus as set forth in claim 10, in which
said area screen data generating unit is operative to generate said area screen data in such a manner that said order of map data to be deleted decided by said deletion order deciding unit is indicated by said display unit as a number.

12. A communication type map display apparatus as set forth in claim 10, in which
said area screen data generating unit is operative to generate said area screen data in such a manner that said order of map data to be deleted decided by said deletion order deciding unit is indicated by said display unit at predetermined time intervals.

13. A communication type map display apparatus as set forth in claim 10, in which
said area screen data generating unit is operative to generate said area screen data in such a manner that an area to be indicated based on said map data decided by said deletion order deciding unit to be deleted in order of the number equal to the number of instructions inputted by said inputting unit is recognized as being distinct in said area screen under the condition that said instruction inputted by said inputting unit requests to confirm said order of map data to be deleted decided by said deletion order deciding unit.

14. A communication type map display apparatus as set forth in claim 10, in which
said deletion order deciding unit is operative to decide an order of map data to be deleted from said storage unit in accordance with an order indicated by said instruction inputted by said inputting unit under the condition that said instruction inputted by said inputting unit requests to indicate map data to be deleted from said storage unit.

15. A communication type map display apparatus as set forth in claim 10, in which
said deletion order deciding unit is operative to decide map data to be deleted from said storage unit, in such a manner that map data indicated by said instruction inputted by said inputting unit is excluded under the condition that said instruction inputted by said inputting unit requests to indicate map data not to be deleted from said storage unit.

16. A communication type map display apparatus as set forth in claim 1, in which
said display unit is operative to display a window on said map screen in such a manner that said area screen is displayed within said window in the case that said area screen and said map screen are displayed by said display unit.
